# EUROPÄISCHE PATENTSCHRIFT

(11) **EP 4 533 039 B1**
(45) Veröffentlichungstag und Bekanntmachung des Hinweises auf die Patenterteilung: **11.03.2026**
(21) Anmeldenummer: 23730418.3
(22) Anmeldetag: 31.05.2023
(51) Int. Cl.: G01F 1/84

(54) **MODULARES CORIOLIS-DURCHFLUSSMESSGERÄT**
MODULAR CORIOLIS FLOW METER
DÉBITMÈTRE À EFFET CORIOLIS MODULAIRE

(30) Priorität: 03.06.2022 DE 102022114149
(43) Veröffentlichungstag der Anmeldung: 09.04.2025
(73) Patentinhaber: Endress+Hauser Flowtec AG, 4153 Reinach (CH)
(72) Erfinder: SCHWENTER, Benjamin, 4107 Ettingen (CH); BREDA, Peppino, 4410 Liestal (CH); WERNER, Marc, 79639 Grenzach-Wyhlen (DE)
(74) Vertreter: Endress + Hauser Group Services (Deutschland) AG+Co. KG
(86) Internationale Anmeldenummer: PCT/EP2023/064517
(87) Internationale Veröffentlichungsnummer: WO 2023/232851

(56) Entgegenhaltungen:
- WO-A1-2021/257247
- DE-A1- 102005 046 331
- US-A1- 2017 122 787
- US-A1- 2018 113 014
- US-A1- 2020 116 612
- US-B2- 7 546 777

## Beschreibung

Feldgeräte der Prozessmesstechnik mit einem Messaufnehmer des Vibrationstypen und besonders Coriolis-Durchflussmessgeräte sind seit vielen Jahren bekannt. Der grundsätzliche Aufbau eines solchen Messgerätes wird beispielsweise in der EP 1 807 681 A1 beschrieben.

Typischerweise weisen Coriolis-Durchflussmessgeräte zumindest ein oder mehrere schwingfähige Messrohre auf, welche mittels eines Schwingungs-erregers in Schwingung versetzt werden können. Diese Schwingungen übertragen sich über die Rohrlänge und werden durch die Art des im Messrohr befindlichen fließfähigen Mediums und dessen Durchflussgeschwindigkeit beeinflusst. Ein Schwingungssensor oder insbesondere zwei voneinander beabstandete Schwingungssensoren können an einer anderen Stelle des Messrohres die variierten Schwingungen in Form eines Messsignals oder mehrerer Messsignale aufnehmen. Aus dem oder den Messsignalen kann eine Auswerteeinheit sodann den Massedurchfluss, die Viskosität und/oder die Dichte des Mediums ermitteln. Die Messrohre sind üblicherweise über ein Verteilerstück mit dem Gehäuse verbunden. Dabei sind die drei genannten Komponenten miteinander verschweißt. Es sind jedoch auch Coriolis-Durchflussmessgeräte mit austauschbaren Einweg-Messrohranordnungen bekannt, die auf einer modularen Bauweise basieren. So wird beispielsweise in der WO 2011/099989 A1 ein Verfahren zur Herstellung einer monolithisch ausgebildeten Messrohranordnung eines Coriolis-Durchflussmessgerätes mit gebogenen Messrohren gelehrt, wobei der Messrohrkörper der jeweiligen Messrohre zuerst massiv aus einem Polymer gebildet und der Kanal zum Führen des fließfähigen Mediums anschließend spannend eingearbeitet wird. Die WO 2011/099989 A1 lehrt - ebenso wie die US 10,209,113 B2 - einen Verbindungskörper, welcher dazu eingerichtet ist, eine auswechselbare Messrohrmodul, umfassend dünnwandige Kunststoffrohre, aufzunehmen und zu stützen. Die Befestigung der Messrohrmodul in einer mit den notwendigen Erregern und Sensoren ausgestatteten Trägervorrichtung erfolgt über den Verbindungskörper.

Aus dem Stand der Technik sind Coriolis-Durchflussmessgeräte bekannt, bei denen der Temperatursensor durch z.B. eine Lötverbindung am Messrohr befestigt ist. Eine derartige Lösung ist jedoch für Einweganwendungen äußerst nachteilig, da in dem Fall eine elektrische Kontaktierung des Temperatursensors mit einer Messschaltung beim Anordnen des Messrohrmoduls in der Aufnahme sichergestellt werden muss. Zudem würde dies dazu führen, dass der Temperatursensor nach jedem Gebrauch des Messrohrmoduls mit entsorgt wird. Optische Temperatursensoren sind grundsätzlich bekannt. In der US 2017/0102257 A1 und der US 2017/0122787 A1 werden der Einsatz eines optischen Temperatursensors in einem herkömmlichen Coriolis-Durchflussmessgerät offenbart. Der Temperatursensor ist in dem Gehäuseinneren angeordnet und dem Messrohr zugewandt. Eine derartige Lösung ist jedoch für Einweganwendungen, bei denen das Messrohrmodul ständig ausgewechselt wird nicht geeignet, da es beim Einführen des Messrohrmoduls in die Messrohrmodulaufnahme zu einem Zusammenstoß mit dem optischen Temperatursensor und somit zur Beschädigung beider Komponenten kommen kann. Weiterhin ist die offenbarte Lösung nicht reinigbar und somit für die meisten biopharmazeutischen Anwendungen nicht geeignet.

Der Erfindung liegt die Aufgabe zugrunde den genannten Problemen Abhilfe zu schaffen.

Die Aufgabe wird gelöst durch das modulare Coriolis-Durchflussmessgerät nach Anspruch 1.

Das erfindungsgemäße modulare Coriolis-Durchflussmessgerät zum Bestimmen einer Prozessgröße eines fließfähigen Mediums umfasst:
- ein Messrohrmodul, umfassend:
   -- ein, insbesondere metallisches, Messrohr zum Führen des Mediums,
   -- eine primäre Erregerkomponente, welche am Messrohr angeordnet ist,
   -- eine primäre Sensorkomponente, welche am Messrohr angeordnet ist;
- ein Trägermodul, umfassend:
   -- eine Aufnahme, in welche das Messrohrmodul mit einer lösbaren Verbindung anordenbar ist,
   -- einen kontaktlosen Temperatursensor, welcher derart orientiert ist, dass wenn das Messrohrmodul im Trägermodul, insbesondere in der Aufnahme angeordnet ist, der Temperatursensor auf eine Oberfläche des Messrohrmoduls, insbesondere eine Messrohroberfläche des mindestens einen Messrohres gerichtet ist und einen von der Oberfläche des Messrohrmoduls, insbesondere der Messrohroberfläche des Messrohres emittierten Lichtstrahl empfängt,
   -- eine zur primären Erregerkomponente komplementären sekundären Erregerkomponente,
   -- eine zur primären Sensorkomponente komplementären sekundären Sensorkomponente,

und ist dadurch gekennzeichnet,
dass das Trägermodul (10) eine Elektronikkammer (30) umfasst, in welcher Elektronikkomponenten (40) zum Betreiben des modularen Coriolis-Durchflussmessgerätes (1) angeordnet sind,
dass das Trägermodul (10) eine, insbesondere metallische, Trägermodulwandung (31) umfasst,
wobei die Trägermodulwandung (31) die Elektronikkammer (30) und die Aufnahme (11) begrenzt,
wobei die Trägermodulwandung (31) eine durchgehende Öffnung (32) aufweist, welche die Aufnahme (11) mit der Elektronikkammer (30) verbindet,
wobei in der Öffnung (32) ein Schutzglas (33) angeordnet ist,
dass der Temperatursensor (12) in der Elektronikkammer (30) angeordnet ist und
dass der Temperatursensor (12) den Lichtstrahl durch die Öffnung (32) empfängt.

Durch die Verwendung eines kontaktlosen Temperatursensors, die Anordnung des Temperatursensors in der Elektronikkammer und die Trennung der Elektronikkammer und die Aufnahme über eine Öffnung mit Schutzglas ergibt sich eine Lösung für Temperaturmessungen, die für Einweganwendungen geeignet ist und Schäden beim Montieren der Messrohrmodule vermeidet.

Vorteilhafte Ausgestaltung der Erfindung sind Gegenstand der Unteransprüche.

Eine Ausgestaltung sieht vor, dass der Temperatursensor als Infrarot-Sensor ausgebildet ist und der Lichtstrahl infrarotes Licht umfasst.

Durch den Einsatz eines Infrarot-Sensors bleibt die Temperatur des zu führenden Mediums unbeeinflusst und kontaktlose Temperaturmessungen auf kurzer Distanz und in einem lichtdichten Raum sind möglich.

Eine Ausgestaltung sieht vor, dass das Schutzglas zumindest abschnittsweise Zinksulfid aufweist.

Eine Ausgestaltung sieht vor, dass das Schutzglas zumindest abschnittsweise Chalkogenide aufweist.

Die beiden genannten Materialien für das Schutzglas sind besonders für den Einsatz von Infrarot-Sensoren geeignet, da diese besonders transparent für Strahlung mit einer Wellenlänge zwischen 8 und 12 µm sind.

Eine Ausgestaltung sieht vor, dass das Schutzglas in einem ersten Abschnitt einen ersten Durchmesser *d*₁ und in einem zweiten Abschnitt einen zweiten Durchmesser *d*₂ aufweist,
wobei der erste Durchmesser *d*₁ größer ist als der zweite Durchmesser *d*₂,
wobei der erste Durchmesser *d*₁ größer ist als ein kleinster Durchmesser *d_{oef}* der Öffnung.

Eine Ausgestaltung sieht vor, dass im zweiten Abschnitt des Schutzglases ein Dichtmittel, insbesondere ein Dichtring, am Schutzglas, insbesondere derart angeordnet ist, dass es offen von der Aufnahme aus sichtbar ist,
wobei das Dichtmittel dazu eingerichtet ist, die Elektronikkammer gegenüber der Aufnahme abzudichten.

Aus der Dimensionierung der einzelnen Durchmesser des Schutzglases in Verbindung mit dem Dichtmittel ergibt sich eine für die "Gute Herstellungspraxis" (current Good Manufacturing Practice, cGMP) besonders geeignete Lösung, welche die Reinigbarkeit des Trägermoduls und dessen Einsatz in biopharmazeutischen Anwendungen erlaubt.

Eine Ausgestaltung sieht vor, dass das Schutzglas in Längsrichtung eine Erstreckung *d_{L,max}* von maximal 15 mm, insbesondere 10 mm und bevorzugt 7 mm aufweist,
wobei die Erstreckung *d_{L,min}* mindestens 0,5 mm, insbesondere 1 mm und bevorzugt 3 mm ist.

Eine Ausgestaltung sieht vor, dass das Trägermodul eine Befestigungsvorrichtung zum Fixieren des Schutzglases in der Öffnung umfasst,
wobei das Befestigungsvorrichtung das Schutzglas vom Inneren der Elektronikkammer aus in Richtung der Aufnahme presst.

Dabei kann die Befestigungsvorrichtung derart ausgebildet sein, dass es gegen das Schutzglas selbst drückt oder gegen ein Dichtmittel, welches zwischen Befestigungsvorrichtung und Schutzglas angeordnet ist.

Eine Ausgestaltung sieht vor, dass der Temperatursensor eine, insbesondere eloxierte, Blende zum Ausblenden von Störstrahlung aufweist,
wobei die Blende einen minimalen Abstand *d_{Blende,min}* zur Messrohroberfläche von 1 mm, insbesondere von 2 mm und bevorzugt von 4 mm aufweist,
wobei die Blende einen maximalen Abstand *d_{Blende,max}* zur Messrohroberfläche von 18 mm, insbesondere von 12 mm und bevorzugt von 9 mm aufweist.

Eine Ausgestaltung sieht vor, dass das mindestens eine Messrohr eine Temperaturmessstelle, insbesondere in Form einer Mattierung, aufweist, welche eine von der restlichen Messrohroberfläche abweichende Strukturierung aufweist,
wobei der Temperatursensor auf die Temperaturmessstelle gerichtet ist.

Eine Ausgestaltung sieht vor, dass die Temperaturmessstelle mittels eines Laserverfahrens strukturiert ist.

Eine Ausgestaltung sieht vor, dass die Temperaturmessstelle mittels einer Oberflächenbehandlung durch Einwirken von Strahlmittel, insbesondere Sand, strukturiert ist.

Eine Ausgestaltung sieht vor, dass die Temperaturmessstelle durch eine auf dem Messrohr aufgebrachte Folie, insbesondere mit Strukturierungen, gebildet ist.

Eine Ausgestaltung sieht vor, dass die Aufnahme bei Anordnung des Messrohrmoduls im Wesentlichen lichtdicht abgeschlossen ist.

Die Messrohroberfläche und deren Struktur hat maßgeblichen Einfluss auf die Emissivität des Messrohres. Vorteil der genannten Ausgestaltungen ist eine Standardisierung der zu überwachenden Messrohroberfläche bzw. Temperaturmessstelle, um somit Ergebnisse unterschiedlicher Messrohrmodule vergleichbar zu machen.

Eine Ausgestaltung sieht vor, dass ein Abstand *d_{Schutz}* zwischen Messrohroberfläche und Schutzglas kleiner als 5 und größer als 0,5 mm, insbesondere kleiner als 3 und größer als 0,7 mm und bevorzugt kleiner als 2 und größer als 1 mm ist.Vorteil von der Ausgestaltung ist, dass in dem genannten Bereich das mindestens eine Messrohr des Messrohrmoduls frei schwingen kann und gleichzeitig die potentielle in die Blende eindringende Störstrahlung minimiert wird. Und das bei einer für die Temperaturmessung optimalen Lichtstrahlintensität.

Eine Ausgestaltung sieht vor, dass das Messrohrmodul eine Temperaturmessstelle aufweist, welche als ein an das mindestens eine Messrohr, insbesondere formschlüssig, kraftschlüssig und/oder stoffschlüssig, angebrachtes Bauteil ausgebildet ist,
wobei der Temperatursensor auf die Temperaturmessstelle, insbesondere auf das Bauteil gerichtet ist,
wobei die Oberfläche zumindest abschnittsweise auf dem Bauteil liegt.

Vorteilhaft an der Ausgestaltung ist, dass durch das zusätzlich am Messrohr angeordnete Bauteil die Fläche des Messrohrmoduls, über welche der Temperatursensor die Temperatur des Mediums bestimmt, nicht durch die Nennweite des mindestens einen Messrohres begrenzt ist und somit individuell einstellbar ist. Dies ist besonders für Messrohr mit kleinen Nennweiten vorteilhaft.

Das Bauteil kann bspw. ein Kunststoffbauteil sein, welches auf das Messrohr geklebt ist. Alternativ kann das Bauteil auch durch einen mechanischen Koppler, welcher zwei Messrohre miteinander mechanisch koppelt oder einen Verbindungskörper gebildet sein, welcher dazu eingerichtet ist, das Messrohrmodul mit einem Verteilerstück und/oder der Prozessleitung zu verbinden. Das Bauteil ist derart am Messrohr befestig und das Material des Bauteils ist vorzugsweise so gewählt, dass ein guter Wärmeübertrag zwischen Messrohr und Bauteil vorliegt.

Eine Ausgestaltung sieht vor, dass das Bauteil der primären Sensorkomponente oder der primären Erregerkomponente enspricht.

Bei der primären Sensorkomponente oder der primären Erregerkomponente kann es sich um jeweils einen Permanentmagneten, insbesondere in Verbindung mit einer Permanentmagnethalterung handeln, welcher, insbesondere stoffschlüssig, mit dem Messrohr verbunden ist.

Die Erfindung wird anhand der nachfolgenden Figuren näher erläutert. Es zeigt:
Fig. 1a: eine perspektivische Ansicht auf eine Ausgestaltung des erfindungsgemäßen Coriolis-Durchflussmessgerätes, bei dem das Messrohrmodul neben dem Trägermodul und dessen Aufnahme angeordnet ist;
Fig. 1b: eine perspektivische Ansicht auf eine Ausgestaltung des erfindungsgemäßen Coriolis-Durchflussmessgerätes, bei dem das Messrohrmodul in der Aufnahme angeordnet ist;
Fig. 1c: eine perspektivische Ansicht auf eine Ausgestaltung des erfindungsgemäßen Coriolis-Durchflussmessgerätes, bei dem das Messrohrmodul mit einer Befestigungsvorrichtung in der Aufnahme fixiert ist;
Fig. 2: eine Detailansicht auf einen Längsschnitt durch eine Ausgestaltung des erfindungsgemäßen Coriolis-Durchflussmessgerätes; und
Fig. 3a-c: drei Ausgestaltungen des erfindungsgemäßen modularen Coriolis-Durchflussmessgerätes.

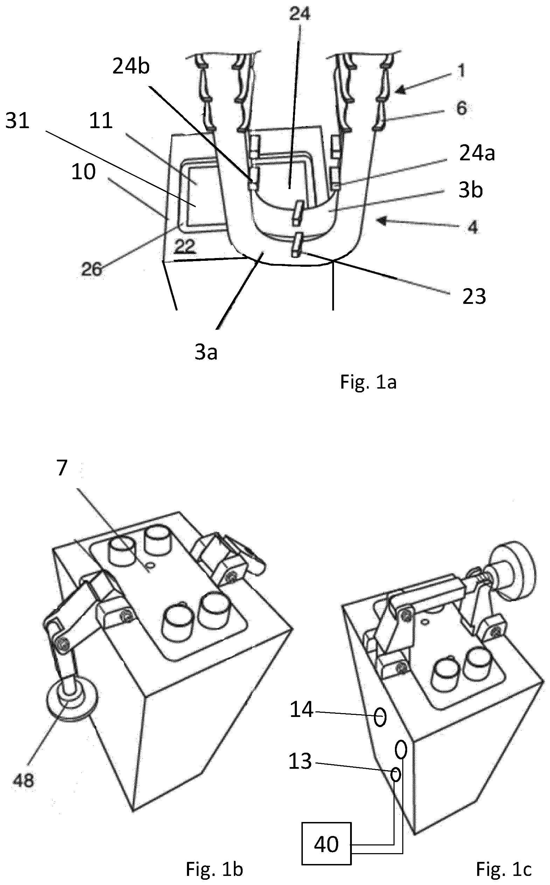

Eine erfindungsgemäße Ausgestaltung wird in den Fig. 1a bis 1c gezeigt. Diese zeigen das schrittweise Montieren des Messrohrmoduls 4 in der Aufnahme 11 des Trägermoduls 10. Fig. 1a zeigt eine perspektivische Ansicht auf eine Ausgestaltung des erfindungsgemäßen Coriolis-Durchflussmessgerätes 1, bei dem das Messrohrmodul 4 neben dem Trägermodul 10 und dessen Aufnahme 11 angeordnet ist. Das modulare Coriolis-Durchflussmessgerät 1 zum Bestimmen einer Prozessgröße eines fließfähigen Mediums umfasst ein Messrohrmodul 4, und ein Trägermodul 10. Das Messrohrmodul 4 umfasst mindestens ein Messrohr 3 zum Führen des fließfähigen Mediums. Das Messrohr 3 ist vorzugsweise metallisch ausgebildet. Es kann jedoch zusätzlich oder alternativ einen Kunststoff, eine Keramik und/oder ein Glas umfassen. In der abgebildeten Ausgestaltung umfasst das Messrohrmodul 4 genau zwei Messrohre 3a, 3b. An den äußeren Mantelflächen der Messrohre 3a, 3b sind jeweils eine primäre Erregerkomponente 23 angeordnet. Die primäre Erregerkomponente 23 umfasst mindestens einen Permanentmagneten. Weiterhin sind an den äußeren Mantelflächen der Messrohre 3a, 3b jeweils zwei primäre Sensorkomponenten 24a, 24b angebracht. Die primäre Sensorkomponente 24a, 24b umfasst ebenfalls mindestens einen Permanentmagneten. Die jeweiligen Einlaufabschnitte und die Auslaufabschnitte der beiden Messrohre sind miteinander über einen plattenförmig ausgebildeten Verbindungskörper 7 verbunden. Dieser dient zum Befestigen eines Verteilerstückes (nicht abgebildet) mit den Messrohren 3a, 3b und weist die Anpressfläche für die Befestigungsvorrichtung 48 auf. Alternativ kann das Verteilerstück auch ohne Verbindungskörper 7 mit den Messrohren 3a, 3b verbunden sein. In dem Fall erfolgt eine Befestigung des Messrohrmoduls 4 mit der Befestigungsvorrichtung 48 über das Verteilerstück. Gemäß der abgebildeten Ausgestaltung erfolgt die mechanische Verbindung des Trägermoduls 10 mit den Messrohren 3a, 3b über den Verbindungskörper 7. Der Verbindungskörper 7 liegt im finalen Montagezustand auf einer in den Trägermodulkörper 22 eingelassenen Auflagefläche 26 auf. Weiterhin sind mechanische Koppler 6 vorgesehen, welche die Einlaufabschnitte oder die Auslaufabschnitte der Messrohre 3a, 3b untereinander verbinden. Das Trägermodul 10 umfasst eine Aufnahme 11, in welche das Messrohrmodul 4 mit einer lösbaren Verbindung anordenbar ist. Die Aufnahme 11 wird durch die Trägermodulwandung 31 begrenzt und ist gemäß der abgebildeten Ausgestaltung im Wesentlichen eine Öffnung in welche bzw. ein freies Volumen im Trägermodul 10 in welches das Messrohrmodul 4 schwingfähig anordenbar ist. Die Trägermodulwandung 31 ist vorzugsweise metallisch ausgebildet. Das Messrohrmodul 4 kann seitlich, senkrecht zur eigenen Längsachse (nicht abgebildet) oder frontal in Richtung der eigenen Längsachse in die Aufnahme 11 angeordnet werden. Von der Aufnahme 11 durch die Trägermodulwandung 31 getrennt ist eine Elektronikkammer 30, in welchem Elektronickomponenten 40 zum Betreiben des modularen Coriolis-Durchflussmessgerätes 1 und zum Bestimmen der Prozessgröße angeordnet sind. Die Elektronikkomponenten 40 können Anschlüsse, Kabel, Leiterplatten, Verstärker, elektronische Schaltkreise mit Widerständen, Kondensatoren, Dioden, Transistoren und Spulen, digitale und/oder analoge Schaltungen, und/oder einen programmierbaren Mikroprozessor, d.h. einen als integrierter Schaltkreis ausgeführter Prozessor umfassen. Die Elektronikkomponenten 40 umfassen ebenfalls die Betriebsschaltung, Regelschaltung, Messschaltung, Auswerteschaltung und/oder Anzeigeschaltung.

Fig. 1b zeigt ein in der Aufnahme 11 angeordnetes Messrohrmodul 4. Der Verbindungskörper 7 liegt dabei auf der Auflagefläche 26 auf. Die Messrohre 3a, 3b ragen schwingfähig in die Aufnahme 11 hinein, ohne dabei die Trägermodulwandung 31 zu berühren. Der Verbindungskörper 7 dient dazu, eine Verbindung mit einem Anschlusskörper (nicht abgebildet), insbesondere einem Verteilerstück zu formen, mit welchem das Messrohrmodul 4 mit einer Prozessleitung verbindbar ist. Das abgebildete Messrohrmodul 4 ist nicht fixiert.

Fig. 1c zeigt ein Coriolis-Durchflussmessgerätes 1, bei dem das Messrohrmodul 4 mit einer Befestigungsvorrichtung 48 in der Aufnahme 11 so fixiert ist, dass es wieder durch den Bediener lösbar und austauschbar ist. Das Messrohrmodul 4 ist mechanisch lösbar mit der Trägermodul 10 verbunden bzw. verbindbar. Nachdem das Messrohrmodul 4 fixiert ist und somit ordnungsgemäß angeordnet und eingerichtet ist, wird die sekundäre Erregerkomponente 13 und die sekundäre Sensorkomponente 14 aktiviert. Im angeordneten Zustand des Messrohrmoduls 4 stehen die sekundäre Erregerkomponente 13 und die primäre Erregerkomponente 23, und entsprechend die sekundäre Sensorkomponente 14 und die primäre Sensorkomponente 24a, 24b in magnetischer Wirkung. Die sekundäre Erregerkomponente 13 ist dazu eingerichtet, das mindestens eine Messrohr 3 in Schwingungen zu versetzen. Dafür umfasst die sekundäre Erregerkomponente 13 üblicherweise eine magnetische Spule, welche über eine Betriebsschaltung betrieben wird. Die Betriebsschaltung kann Teil der Elektronikkomponenten 40 sein. Die Spule erzeugt - entsprechend dem Betriebssignal mit dem es betrieben wird - ein zeitlich veränderliches Magnetfeld. Dieses bewirkt eine Kraft auf die primäre Erregerkomponente 23, welche das mindestens eine Messrohr 3 zum Schwingen bringt. Das Schwingverhalten des mindestens einen Messrohres 3 wird über die sekundäre Sensorkomponente 14 gemessen. Das örtlich an der sekundäre Sensorkomponente 14 vorliegende zeitlich veränderliche Magnetfeld der primären Sensorkomponente 24a, 24b - welches sich durch das Schwingen des mindestens einen Messrohres 3 ergibt - erzeugt in der Sensorkomponente 14, welche vorzugsweise ebenfalls eine magnetische Spule umfasst, ein elektrisches Messsignal, welches in die Bestimmung der Prozessgröße eingeht. Gemäß der abgebildeten Ausgestaltung sind genau zwei sekundäre Erregerkomponenten 13 und vier sekundäre Sensorkomponenten 14 vorgesehen. Alternativ können auch genau eine sekundäre Erregerkomponente 13 und genau zwei sekundäre Sensorkomponente 14 für zwei Messrohre 3a, 3b genügen, wenn diese derart im Trägermodul 10 angeordnet sind, dass sie sich zwischen den beiden Messrohren 3a, 3b, und somit auch zwischen den primären Erregerkomponenten 23 und primären Sensorkomponenten 24a, 24b im angeordneten Zustand befinden. Die sekundäre Erregerkomponente 13 und die sekundäre Sensorkomponente 14 sind im/am Trägermodul 10 angeordnet. Sie können beispielsweise so angeordnet sein, dass sie durch die Trägermodulwandung 31 von der Aufnahme 11 getrennt sind. Alternativ kann die Trägermodulwandung 31 der Anzahl der sekundären Erregerkomponente 13 entsprechende Erregeröffnungen aufweisen, in denen die sekundäre Erregerkomponenten 13 angeordnet sind. Entsprechendes gilt auch für die sekundäre Sensorkomponente 14. Die Trägermodulwandung 31 kann der Anzahl der sekundären Sensorkomponenten 14 entsprechende Sensoröffnungen aufweisen, in denen die sekundären Sensorkomponenten 14 angeordnet sind.

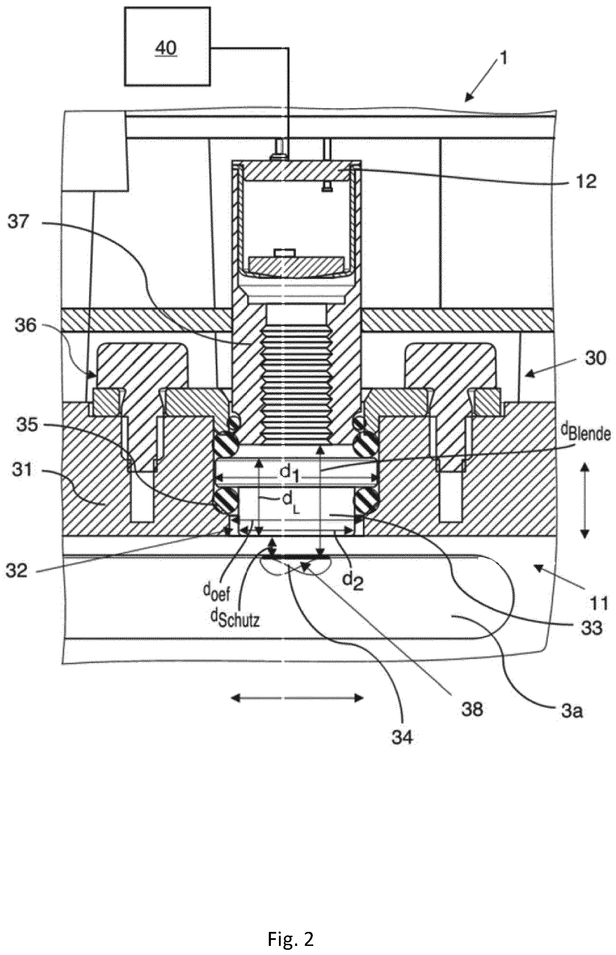

Fig. 2 zeigt eine Detailansicht eines Längsschnittes durch eine Ausgestaltung des erfindungsgemäßen Coriolis-Durchflussmessgerätes 1. Die Trägermodulwandung 31 trennt die Aufnahme 11 von der Elektronikkammer 30. In der Elektronikkammer 30 sind Elektronikkomponenten 40 angeordnet, welche mit der sekundären Erregerkomponente und/oder der sekundären Sensorkomponente (nicht abgebildet) elektrisch verbunden sind. In der Aufnahme 11 ist ein Messrohr 3a eines Messrohrmoduls angeordnet. Die Trägermodulwandung 31 weist eine durchgehende Öffnung 32 auf, welche die Aufnahme 11 mit der Elektronikkammer 30 verbindet. In dieser Öffnung 32 ist ein Schutzglas 33 angeordnet.

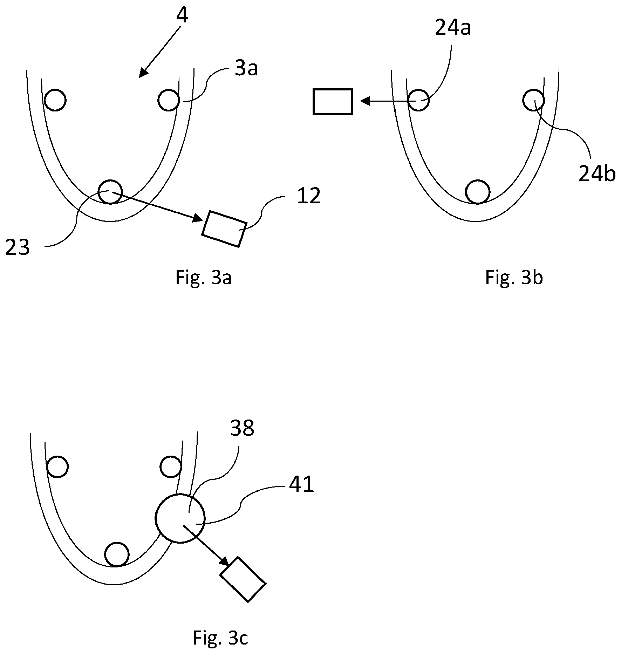

In der Elektronikkammer 30 ist ein kontaktloser Temperatursensor 12 angeordnet zum Bestimmen einer Temperatur des Messrohres 3a bzw. des im Messrohr 3a geführten Mediums. Der Temperatursensor 12 ist derart orientiert, dass wenn das Messrohrmodul bzw. das Messrohr 3a im Trägermodul 10, insbesondere in der Aufnahme 11 angeordnet ist, dieser auf eine Oberfläche des Messrohrmoduls 4 - in dem abgebildeten Fall auf eine Messrohroberfläche 34 des mindestens einen Messrohres 3, insbesondere des Messrohres 3a - gerichtet ist und einen von der Oberfläche des Messrohrmoduls 4 - in dem Fall die Messrohroberfläche 34 des mindestens einen Messrohres 3 - emittierten Lichtstrahl durch die Öffnung 32 empfängt. Alternativ kann die zu überwachende Oberfläche auch auf einem der mechanischen Koppler, dem Verbindungskörper oder dem Anschlusskörper bzw. Verteilerstück liegen. Alternativ kann das Messrohrmodul 4 weiterhin ein Bauteil aufweisen, welches mit dem Zweck an mindestens einem der Messrohre 3a, 3b angebracht ist, eine ausreichend große abstrahlende Oberfläche für die Bestimmung der Mediumstemperatur bereitzustellen (siehe Fig. 3c).

Der Temperatursensor 12 weist eine, insbesondere eloxierte, Blende 37 zum Ausblenden von Störstrahlung, eine Linse und einen SMD IR-Fühler auf. Die Blende 37 ist dabei möglichst als schwarzer Strahler ausgebildet (z.B. aus eloxiertem Aluminium), damit er selbst keine Strahlung auf den SMD IR-Fühler wirft. Der Temperatursensor 12 ist in der abgebildete Ausgestaltung auf einer Leiterplatte angeordnet. Die Blende 37 weist einen minimalen Abstand *d_{Blende,min}* zur Messrohroberfläche 34 von 1 mm, insbesondere von 2 mm und bevorzugt von 4 mm auf. Zudem weist die Blende 37 einen maximalen Abstand *d_{Blende,max}* zur Messrohroberfläche 34 von 18 mm, insbesondere von 12 mm und bevorzugt von 9 mm auf.

Das Schutzglas 33 weist zumindest abschnittsweise Zinksulfid und/oder Chalkogenide auf. Das Schutzglas ist derart geformt, ausgebildet und in der Öffnung angeordet, dass Reinigungsmittel beim Reinigen des Trägermoduls 10 nicht in die Elektronikkammer 40 eindringt. Dafür weist das Schutzglas 33 in einem ersten Abschnitt einen ersten Durchmesser *d*₁ und in einem zweiten Abschnitt einen zweiten Durchmesser *d*₂ auf. Dabei ist der erste Durchmesser *d*₁ größer als der zweite Durchmesser *d*₂ und der erste Durchmesser *d*₁ ist größer als ein kleinster Durchmesser *d_{oef}* der Öffnung 32. Das Schutzglas 33 weist in Längsrichtung eine maximale Erstreckung *d_{L,max}* von maximal 15 mm, insbesondere 10 mm und bevorzugt 7 mm und eine minimale Erstreckung *d_{L,min}* von mindestens 0,5 mm, insbesondere 1 mm und bevorzugt 3 mm auf. Die Aufnahme 11 und das Messrohrmodul 4 sind derart ausgelegt, dass ein Abstand *d_{Schutz}* zwischen Messrohroberfläche 34 und Schutzglas 33 kleiner als 5 und größer als 0,5 mm, insbesondere kleiner als 3 und größer als 0,7 mm und bevorzugt kleiner als 2 und größer als 1 mm ist. Die Dimensionierungen sind so gewählt, dass möglichst wenig umliegende Strahlung durch die Öffnung in den Temperatursensor 12 eindringt und dass möglichst nur die vom Messrohr 3a emittierte Strahlung durch den Temperatursensor 12 aufgenommen wird.

Im zweiten Abschnitt des Schutzglases 33 ist ein Dichtmittel 35 zum Abdichten der Aufnahme 11 gegenüber der Aufnahme 11 - in dem abgebildeten Fall ein Dichtring - am Schutzglas 33, insbesondere derart angeordnet, dass es offen von der Aufnahme 11 aus sichtbar ist. Somit wird die Vorgabe zur Sicherstellung der Produktqualität von Arzneimitteln und Wirkstoffen nach der aktuellen "Gute Herstellungspraxis" (current Good Manufacturing Practice, cGMP) und der 2022 gültigen IP56 erfüllt.

Das Trägermodul 10 weist eine Befestigungsvorrichtung 36 zum Fixieren des Schutzglases 33 in der Öffnung 32 auf. Die Befestigungsvorrichtung ist in der Elektronikkammer 30 angeordnet und derart ausgebildet bzw. dazu eingerichtet, das Schutzglas 33 vom Inneren der Elektronikkammer 30 aus in Richtung der Aufnahme 11 zu pressen. Dabei wird das Schutzglas 33, insbesondere der erste Abschnitt des Schutzglases 33 gegen das Dichtmittel 35 gepresst. Die Befestigungsvorrichtung 36 umfasst in der abgebildete Ausgestaltung eine Ringscheibe, welche über Schrauben mit der Trägermodulwandung 31 verbunden ist. Durch eine mittlere Öffnung der Ringscheibe erstreckt sich die Blende 37. Die Ringscheibe steht in Kontakt und Wirkung mit einem Dichtring, welcher an einer dem Innenraum der Elektronikkammer 30 zugewandten Fläche des Schutzglases 33 angeordnet ist. Alternativ kann die Ringscheibe in direktem Kontakt mit dem Schutzglas 33 stehen. Die Ringscheibe weist einen Kragen auf, welcher de Schutzglas 33 zugewandt ist und welcher sich um die mittlere Öffnung der Ringscheibe erstreckt. Die Ringscheibe ist in der abgebildeten Ausgestaltung rotationssymmetrisch ausgebildet.

Einzelne Komponenten der Elektronikkomponenten 40 sind ebenfalls mit dem Temperatursensor 12 - welcher als Infrarot-Sensor ausgebildet sein kann - elektrisch verbunden. Der Infrarot-Sensor ist dazu eingerichtet infrarotes Licht zu detektieren und in Abhängigkeit davon eine Temperatur des Messrohres 3a bzw. eine mit der Temperatur des Messrohres 3a korrelierende Messgröße zu ermitteln. Eine Ermittlung der Temperatur des Messrohres 3a kann über die Auswerteschaltung erfolgen. Der Temperatursensor 12 ist dazu geeignet, die Temperatur des Messrohres 3a kontaktlos, d.h. ohne, dass er in direkten mechanischen Kontakt mit dem Messrohr 3a steht, zu ermitteln. Dieser ist ebenfalls in der Elektronikkammer 30 angeordnet und durch ein Schutzglas 33 von dem Messrohr 3a getrennt. Um eine Temperatur des Messrohres 3a ermitteln zu können ist der Temperatursensor 12 derart orientiert, dass wenn das Messrohrmodul im Trägermodul, insbesondere in der Aufnahme 11 angeordnet ist, der Temperatursensor 12 auf eine Messrohroberfläche 34 des mindestens einen Messrohres 3 gerichtet ist und einen von der Messrohroberfläche 34 des Messrohres 3 emittierten Lichtstrahl durch die Öffnung 32 empfängt.

Die Aufnahme 11 und das Messrohrmodul 4 sind derart ausgelegt, dass die Aufnahme 11 bzw. das Innenvolumen in dem sich das mindestens eine Messrohr befindet bei Anordnung des Messrohrmoduls 4 im Wesentlichen lichtdicht abgeschlossen ist.

Das mindestens eine Messrohr 3 bzw. das abgebildete Messrohr 3a weist eine Temperaturmessstelle 38 in Form einer Mattierung auf. Die Oberflächenstrukturierung der Temperaturmessstelle 38 weicht von der auf der restlichen Messrohroberfläche vorliegenden Strukturierung ab. Der Temperatursensor 12 ist derart orientiert, dass er auf die Temperaturmessstelle 38 gerichtet ist. Die Temperaturmessstelle 38 kann mittels eines Laserverfahrens und/oder einer Oberflächenbehandlung durch Einwirken von Strahlmittel, insbesondere Sand, strukturiert sein. Alternativ kann die Temperaturmessstelle 38 durch eine auf dem mindestens einen Messrohr bzw. dem Messrohr 3a aufgebrachte Folie, welche ebenfalls eine Strukturierungen aufweisen kann, gebildet sein.

In der abgebildeten Ausgestaltung ist der Temperatursensor auf das im Betrieb schwingende Messrohr gerichtet. Alternativ kann der Temperatursensor auch so ausgericht sein, dass er auf einen der mechanischen Koppler, auf einen nicht schwingenden Teilabschnitt des Messrohres, den Verbindungskörper 7 oder den Anschlusskörper bzw. das Verteilerstück des Messrohrmoduls gerichtet ist.

Fig. 3a bis 3c zeigen mehrere unterschiedliche Ausgestaltungen des Messrohrmoduls 4, bei denen der Temperatursensor 12 auf unterschiedliche Oberflächen des Messrohrmoduls 4 gerichtet ist bzw. die Mediumstemperatur anhand unterschiedlicher abstrahlender Oberflächen des Messrohrmoduls 4 bestimmt. In der Ausgestaltung der Fig. 3a ist der kontaktlosen Temperatursensor 12 derart orientiert, dass er auf die Oberfläche der primären Erregerkomponente 23 - in dem Fall handelt es sich beim der primären Erregerkomponente 23 um einen Permanentmagneten, der am Messrohr 3a angebracht ist - gerichtet ist und einen von der Oberfläche emittierten Lichtstrahl (siehe Pfeil) empfängt.

In der Ausgestaltung der Fig. 3b ist der kontaktlosen Temperatursensor 12 derart orientiert, dass er auf die Oberfläche der primären Sensorkomponente 24a - in dem Fall handelt es sich beim der primären Sensorkomponente 24a um einen Permanentmagneten, der am Messrohr 3a angebracht ist - gerichtet ist und einen von der Oberfläche emittierten Lichtstrahl (siehe Pfeil) empfängt.

In der Ausgestaltung der Fig. 3c ist der kontaktlosen Temperatursensor 12 derart orientiert, dass er auf eine Oberfläche eines am Messrohr 3a angebrachten Bauteils 41 - in dem Fall handelt es sich beim angebrachten Bauteil 41 um ein schwarzes Kunststoffbauteil - gerichtet ist und einen von der Oberfläche emittierten Lichtstrahl (siehe Pfeil) empfängt. Das Bauteil 41 ist so ausgelegt, dass sich ein durch das von dem Bauteil 41 emittierte und durch den Temperatursensor 12 empfangene Licht ergebende Messsignal größer ist als ein Messsignal, das sich ergeben würde, wenn der Temperatursensor 12 auf eine Messrohroberfläche des Messrohres 3a gerichtet wäre. Dafür weist das Bauteil 41 beispielsweise einen Querschnittsfläche auf, die größer ist als eine Teilabschnittsfläche des Messrohres 3a, die zum Messsignal am Temperatursensor 12 beitragen würde.

### BEZUGSZEICHENLISTE

| | | |
|---|---|---|
| Modulares Coriolis-Durchflussmessgerät | 1 | |
| Messrohr | 3a, 3b | |
| Messrohrmodul | 4 | |
| Koppler | 6 | |
| Verbindungskörper | 7 | |
| Trägermodul | 10 | |
| Aufnahme | 11 | |
| Temperatursensor | 12 | |
| Trägermodulkörper | 22 | |
| sekundäre Erregerkomponente | 13 | |
| sekundäre Sensorkomponente | 14 | |
| primäre Erregerkomponente | 23 | |
| primäre Sensorkomponente | 24a, 24b | |
| Auflagefläche | 26 | |
| Elektronikkammer | 30 | |
| Trägermodulwandung | 31 | |
| Öffnung | 32 | |
| Schutzglas | 33 | |
| Messrohroberfläche | 34 | |
| Dichtmittel | 35 | |
| Befestigungsvorrichtung | 36 | zum Fixieren des Schutzglases |
| Blende | 37 | |
| Temperaturmessstelle | 38 | |
| Elektronikkomponenten | 40 | |
| Bauteil | 41 | |
| Befestigungsvorrichtung | 48 | zum Fixieren des Messrohrmoduls |

## Patentansprüche

1. Modulares Coriolis-Durchflussmessgerät (1) zum Bestimmen einer Prozessgröße eines fließfähigen Mediums, umfassend:
- ein Messrohrmodul (4), umfassend:
-- ein, insbesondere metallisches, Messrohr (3a, 3b) zum Führen des Mediums,
-- eine primäre Erregerkomponente (23), welche am Messrohr (3a, 3b) angeordnet ist,
-- eine primäre Sensorkomponente (24a, 24b), welche am Messrohr (3a, 3b) angeordnet ist;
- ein Trägermodul (10), umfassend:
-- eine Aufnahme (11), in welche das Messrohrmodul (4) mit einer lösbaren Verbindung anordenbar ist,
-- einen kontaktlosen Temperatursensor (12), welcher derart orientiert ist, dass wenn das Messrohrmodul (3) im Trägermodul (10), insbesondere in der Aufnahme (11) angeordnet ist, der Temperatursensor (12) auf eine Oberfläche des Messrohrmoduls (4), insbesondere eine Messrohroberfläche (34) des mindestens einen Messrohres (3), gerichtet ist und einen von der Oberfläche des Messrohrmoduls (4), insbesondere der Messrohroberfläche (34) des Messrohres (3), emittierten Lichtstrahl (32) empfängt,
-- eine zur primären Erregerkomponente (23) komplementären sekundären Erregerkomponente (13),
-- eine zur primären Sensorkomponente (24) komplementären sekundären Sensorkomponente (14),
**dadurch gekennzeichnet,**
**dass** das Trägermodul (10) eine Elektronikkammer (30) umfasst, in welcher Elektronikkomponenten (40) zum Betreiben des modularen Coriolis-Durchflussmessgerätes (1) angeordnet sind,
**dass** das Trägermodul (10) eine, insbesondere metallische, Trägermodulwandung (31) umfasst,
wobei die Trägermodulwandung (31) die Elektronikkammer (30) und die Aufnahme (11) begrenzt,
wobei die Trägermodulwandung (31) eine durchgehende Öffnung (32) aufweist, welche die Aufnahme (11) mit der Elektronikkammer (30) verbindet,
wobei in der Öffnung (32) ein Schutzglas (33) angeordnet ist,
**dass** der Temperatursensor (12) in der Elektronikkammer (30) angeordnet ist und
**dass** der Temperatursensor (12) den Lichtstrahl durch die Öffnung (32) empfängt.

2. Modulares Coriolis-Durchflussmessgerät nach Anspruch 1,
wobei der Temperatursensor (12) als Infrarot-Sensor ausgebildet ist und der Lichtstrahl infrarotes Licht umfasst.

3. Modulares Coriolis-Durchflussmessgerät nach Anspruch 1 oder 2,
wobei das Schutzglas (33) zumindest abschnittsweise Zinksulfid aufweist.

4. Modulares Coriolis-Durchflussmessgerät nach mindestens einem der vorhergehenden Ansprüche,
wobei das Schutzglas (33) zumindest abschnittsweise Chalkogenide aufweist.

5. Modulares Coriolis-Durchflussmessgerät nach mindestens einem der vorhergehenden Ansprüche,
wobei das Schutzglas (33) in einem ersten Abschnitt einen ersten Durchmesser *d*₁ und in einem zweiten Abschnitt einen zweiten Durchmesser *d*₂ aufweist,
wobei der erste Durchmesser *d*₁ größer ist als der zweite Durchmesser *d*₂,
wobei der erste Durchmesser *d*₁ größer ist als ein kleinster Durchmesser *d_{oef}* der Öffnung (32).

6. Modulares Coriolis-Durchflussmessgerät nach mindestens einem der vorhergehenden Ansprüche,
wobei im zweiten Abschnitt des Schutzglases (33) ein Dichtmittel (35), insbesondere ein Dichtring, am Schutzglas (33), insbesondere derart angeordnet ist, dass es offen von der Aufnahme (11) aus sichtbar ist,
wobei das Dichtmittel (35) dazu eingerichtet ist, die Elektronikkammer (30) gegenüber der Aufnahme (11) abzudichten.

7. Modulares Coriolis-Durchflussmessgerät nach mindestens einem der vorhergehenden Ansprüche,
wobei das Schutzglas (33) in Längsrichtung eine Erstreckung *d_{L,max}* von maximal 15 mm, insbesondere 10 mm und bevorzugt 7 mm aufweist,
wobei die Erstreckung *d_{L,min}* mindestens 0,5 mm, insbesondere 1 mm und bevorzugt 3 mm ist.

8. Modulares Coriolis-Durchflussmessgerät nach mindestens einem der vorhergehenden Ansprüche,
wobei das Trägermodul (10) eine Befestigungsvorrichtung (36) zum Fixieren des Schutzglases (33) in der Öffnung (32) umfasst,
wobei das Befestigungsvorrichtung (36) das Schutzglas (33) vom Inneren der Elektronikkammer (30) aus in Richtung der Aufnahme (11) presst.

9. Modulares Coriolis-Durchflussmessgerät nach mindestens einem der vorhergehenden Ansprüche,
wobei der Temperatursensor (12) eine, insbesondere eloxierte, Blende (37) zum Ausblenden von Störstrahlung aufweist,
wobei die Blende (37) einen minimalen Abstand *d_{Blende,min}* zur Messrohroberfläche (34) von 1 mm, insbesondere von 2 mm und bevorzugt von 4 mm aufweist,
wobei die Blende (37) einen maximalen Abstand *d_{Blende,max}* zur Messrohroberfläche (34) von 18 mm, insbesondere von 12 mm und bevorzugt von 9 mm aufweist.

10. Modulares Coriolis-Durchflussmessgerät nach mindestens einem der vorhergehenden Ansprüche,
wobei das Messrohrmodul (4), insbesonder das mindestens eine Messrohr (3a, 3b) eine Temperaturmessstelle (38), insbesondere in Form einer Mattierung, aufweist, welche eine von der restlichen Messrohroberfläche abweichende Strukturierung aufweist,
wobei der Temperatursensor (12) auf die Temperaturmessstelle (38) gerichtet ist.

11. Modulares Coriolis-Durchflussmessgerät nach Anspruch 10,
wobei die Temperaturmessstelle (38) mittels eines Laserverfahrens strukturiert ist.

12. Modulares Coriolis-Durchflussmessgerät nach Anspruch 10,
wobei die Temperaturmessstelle (38) mittels einer Oberflächenbehandlung durch Einwirken von Strahlmittel, insbesondere Sand, strukturiert ist.

13. Modulares Coriolis-Durchflussmessgerät nach Anspruch 10,
wobei die Temperaturmessstelle (38) durch eine auf dem Messrohrmodul (4), insbesondere auf dem Messrohr (3a, 3b) aufgebrachte Folie, insbesondere mit Strukturierungen, gebildet ist.

14. Modulares Coriolis-Durchflussmessgerät nach mindestens einem der vorhergehenden Ansprüche,
wobei die Aufnahme (11) bei Anordnung des Messrohrmoduls (4) im Wesentlichen lichtdicht abgeschlossen ist.

15. Modulares Coriolis-Durchflussmessgerät nach mindestens einem der vorhergehenden Ansprüche,
wobei ein Abstand *d_{Schutz}* zwischen Messrohroberfläche (34) und Schutzglas (33) kleiner als 5 und größer als 0,5 mm, insbesondere kleiner als 3 und größer als 0,7 mm und bevorzugt kleiner als 2 und größer als 1 mm ist.

16. Modulares Coriolis-Durchflussmessgerät nach mindestens einem der vorhergehenden Ansprüche,
wobei das Messrohrmodul (4) eine Temperaturmessstelle (38) aufweist, welche als ein an das mindestens eine Messrohr (3a, 3b), insbesondere formschlüssig und/oder stoffschlüssig angebrachtes Bauteil (41) ausgebildet ist,
wobei der Temperatursensor (12) auf die Temperaturmessstelle (38) gerichtet ist.

17. Modulares Coriolis-Durchflussmessgerät nach Anspruch 16,
wobei das Bauteil (41) der primären Sensorkomponente (24) und/oder der primären Erregerkomponente (23) enspricht.

## Claims

1. Modular Coriolis flow meter (1) for determining a process variable of a flowable medium, comprising:
- a measuring tube module (4), comprising:
-- a measuring tube (3a, 3b), in particular a metallic measuring tube, for guiding the medium,
-- a primary excitation component (23) arranged on the measuring tube (3a, 3b),
-- a primary sensor component (24a, 24b) arranged on the measuring tube (3a, 3b);
- a carrier module (10) comprising:
-- a receptacle (11) in which the measuring tube module (4) can be arranged with a detachable connection,
-- a contactless temperature sensor (12) oriented such that when the measuring tube module (3) is arranged in the carrier module (10), in particular in the receptacle (11), the temperature sensor (12) is directed towards a surface of the measuring tube module (4), in particular a measuring tube surface (34) of the at least one measuring tube (3), and receives a light beam (32) emitted by the surface of the measuring tube module (4), in particular the measuring tube surface (34) of the measuring tube (3),
-- a secondary excitation component (13) complementary to the primary excitation component (23),
-- a secondary sensor component (14) complementary to the primary sensor component (24),
**characterized by**
that the carrier module (10) comprises an electronics chamber (30) in which electronic components (40) for operating the modular Coriolis flow meter (1) are arranged,
that the carrier module (10) comprises a carrier module wall (31), in particular a metallic one,
wherein the carrier module wall (31) delimits the electronics chamber (30) and the receptacle (11),
wherein the carrier module wall (31) has a continuous opening (32) which connects the receptacle (11) to the electronics chamber (30),
wherein a protective glass (33) is arranged in the opening (32),
the temperature sensor (12) is arranged in the electronics chamber (30), and the temperature sensor (12) receives the light beam through the opening (32).

2. Modular Coriolis flow meter according to claim 1,
wherein the temperature sensor (12) is configured as an infrared sensor and the light beam comprises infrared light.

3. Modular Coriolis flow meter according to claim 1 or 2,
wherein the protective glass (33) comprises zinc sulfide at least in sections.

4. Modular Coriolis flow meter according to at least one of the preceding claims,
wherein the protective glass (33) comprises chalcogenides at least in sections.

5. Modular Coriolis flow meter according to at least one of the preceding claims,
wherein the protective glass (33) has a first diameter *d*₁ and a second diameter *d*₂ in a second section,
where the first diameter *d*₁ is larger than the second diameter *d*₂,
wherein the first diameter *d*₁ is greater than a smallest diameter *d_{oef}* of the opening (32).

6. Modular Coriolis flow meter according to at least one of the preceding claims,
wherein a sealing means (35), in particular a sealing ring, is arranged in the second section of the protective glass (33) on the protective glass (33), in particular in such a way that it is visible from the housing (11),
wherein the sealing means (35) is designed to seal the electronics chamber (30) against the housing (11).

7. Modular Coriolis flow meter according to at least one of the preceding claims,
wherein the protective glass (33) has a longitudinal extension *d_{L,max}* of at most 15 mm, in particular 10 mm, and preferably 7 mm,
wherein the extension *d_{L,min}* is at least 0.5 mm, in particular 1 mm, and preferably 3 mm.

8. Modular Coriolis flow meter according to at least one of the preceding claims,
wherein the carrier module (10) comprises a fastening device (36) for fixing the protective glass (33) in the opening (32),
wherein the fastening device (36) presses the protective glass (33) from the interior of the electronics chamber (30) in the direction of the receptacle (11).

9. Modular Coriolis flow meter according to at least one of the preceding claims,
wherein the temperature sensor (12) has a baffle (37), in particular an anodized baffle, for blocking interfering radiation,
wherein the aperture (37) has a minimum *distance d_{Blende,min}* to the measuring tube surface (34) of 1 mm, in particular 2 mm, and preferably 4 mm,
wherein the aperture (37) has a maximum *distance d_{Blende,max}* to the measuring tube surface (34) of 18 mm, in particular 12 mm, and preferably 9 mm.

10. Modular Coriolis flow meter according to at least one of the preceding claims,
wherein the measuring tube module (4), in particular the at least one measuring tube (3a, 3b), has a temperature measuring point (38), in particular in the form of a matting,
which has a structure that differs from the rest of the measuring tube surface,
wherein the temperature sensor (12) is directed toward the temperature measuring point (38).

11. Modular Coriolis flow meter according to claim 10,
wherein the temperature measuring point (38) is structured by means of a laser process.

12. Modular Coriolis flow meter according to claim 10,
wherein the temperature measuring point (38) is structured by means of a surface treatment involving the application of abrasive material, in particular sand.

13. Modular Coriolis flow meter according to claim 10,
wherein the temperature measuring point (38) is formed by a film, in particular with structures, applied to the measuring tube module (4), in particular to the measuring tube (3a, 3b).

14. Modular Coriolis flow meter according to at least one of the preceding claims,
wherein the receptacle (11) is essentially light-tight when the measuring tube module (4) is arranged.

15. Modular Coriolis flow meter according to at least one of the preceding claims,
wherein a distance *d_{Schutz}* between the measuring tube surface (34) and the protective glass (33) is less than 5 and greater than 0.5 mm, in particular less than 3 and greater than 0.7 mm, and preferably less than 2 and greater than 1 mm.

16. Modular Coriolis flow meter according to at least one of the preceding claims,
wherein the measuring tube module (4) has a temperature measuring point (38) which is designed as a component (41) attached to the at least one measuring tube (3a, 3b), in particular in a form-fitting and/or material-locking manner,
wherein the temperature sensor (12) is directed toward the temperature measuring point (38).

17. Modular Coriolis flow meter according to claim 16,
wherein the component (41) corresponds to the primary sensor component (24) and/or the primary excitation component (23).

## Revendications

1. Débitmètre Coriolis modulaire (1) pour déterminer une grandeur de processus d'un fluide, comprenant :
- un module de tube de mesure (4) comprenant :
-- un tube de mesure (3a, 3b), en particulier métallique, pour guider le fluide,
-- un composant d'excitation primaire (23) disposé sur le tube de mesure (3a, 3b),
-- un composant capteur primaire (24a, 24b) qui est disposé sur le tube de mesure (3a, 3b)
- un module support (10) comprenant :
-- un logement (11) dans lequel le module de tube de mesure (4) peut être disposé avec une connexion amovible,
-- un capteur de température sans contact (12) qui est orienté de telle sorte que lorsque le module de tube de mesure (3) est disposé dans le module de support (10), en particulier dans le logement (11), le capteur de température (12) soit orienté vers une surface du module de tube de mesure (4), en particulier une surface de tube de mesure (34) du au moins un tube de mesure (3), et reçoit un rayon lumineux (32) émis par la surface du module de tube de mesure (4), en particulier la surface de tube de mesure (34) du tube de mesure (3),
-- un composant d'excitation secondaire (13) complémentaire du composant d'excitation primaire (23),
-- un composant de capteur secondaire (14) complémentaire du composant de capteur primaire (24),
**caractérisé en ce que**
**en ce que** le module support (10) comprend une chambre électronique (30) dans laquelle sont disposés des composants électroniques (40) destinés à faire fonctionner le débitmètre Coriolis modulaire (1),
que le module support (10) comprend une paroi de module support (31), en particulier métallique,
la paroi (31) du module support délimitant la chambre électronique (30) et le logement (11),
la paroi (31) du module support présentant une ouverture traversante (32) qui relie le logement (11) à la chambre électronique (30),
un verre de protection (33) étant disposé dans l'ouverture (32),
le capteur de température (12) étant disposé dans la chambre électronique (30) et le capteur de température (12) recevant le faisceau lumineux à travers l'ouverture (32).

2. Débitmètre Coriolis modulaire selon la revendication 1,
le capteur de température (12) étant conçu comme un capteur infrarouge et le faisceau lumineux comprenant de la lumière infrarouge.

3. Débitmètre Coriolis modulaire selon la revendication 1 ou 2,
le verre de protection (33) comportant au moins par sections du sulfure de zinc.

4. Débitmètre Coriolis modulaire selon au moins l'une des revendications précédentes,
dans lequel le verre de protection (33) comporte au moins par sections des chalcogénures.

5. Débitmètre Coriolis modulaire selon au moins l'une des revendications précédentes revendications précédentes,
dans lequel le verre de protection (33) présente, dans une première section, un premier diamètre *d*₁ et un deuxième diamètre *d*₂ dans une deuxième section,
le premier diamètred, étant supérieur au deuxième diamètre *d*₂,
le premier diamètred, étant supérieur au plus petit diamètre *d_{oef}* de la ouverture (32).

6. Débitmètre Coriolis modulaire selon au moins l'une des revendications précédentes,
dans lequel, dans la deuxième partie du verre de protection (33), un moyen d'étanchéité (35), en particulier une bague d'étanchéité, est disposé sur le verre de protection (33), en particulier de telle manière que il soit visible depuis le logement (11),
le moyen d'étanchéité (35) étant conçu pour étanchéifier la chambre électronique (30) par rapport au logement (11).

7. Débitmètre Coriolis modulaire selon au moins l'une des revendications précédentes revendications
le verre de protection (33) présentant dans le sens longitudinal une extension*d_{L,max}* maximale de 15 mm, en particulier de 10 mm et de préférence de 7 mm,
l'extension *d_{L,min}* étant d'au moins 0,5 mm, en particulier de 1 mm et de préférence de 3 mm.

8. Débitmètre Coriolis modulaire selon au moins l'une des revendications précédentes,
le module support (10) comprenant un dispositif de fixation (36) pour fixer le verre de protection (33) dans l'ouverture (32),
le dispositif de fixation (36) pressant le verre de protection (33) depuis l'intérieur de la chambre électronique (30) en direction du logement (11).

9. Débitmètre Coriolis modulaire selon au moins l'une des revendications précédentes,
le capteur de température (12) comportant un diaphragme (37), en particulier anodisé, pour masquer le rayonnement parasite,
l'ouverture (37) présentant une distance minimale *d_{Blende,min}* par rapport à la surface du tube de mesure (34) de 1 mm, en particulier de 2 mm et de préférence de 4 mm,
l'ouverture (37) présentant une distance maximale *d_{Blende,max}* par rapport à la surface du tube de mesure de 18 mm, en particulier de 12 mm et de préférence de 9 mm.

10. Débitmètre Coriolis modulaire selon au moins l'une des revendications précédentes,
dans lequel le module de tube de mesure (4), en particulier le au moins un tube de mesure (3a, 3b), présente un point de mesure de température (38), en particulier sous la forme d'un matage, qui présente une structure différente de celle du reste de la surface du tube de mesure,
le capteur de température (12) étant orienté vers le point de mesure de température (38).

11. Débitmètre Coriolis modulaire selon la revendication 10,
le point de mesure de température (38) étant structuré au moyen d'un procédé laser.

12. Débitmètre Coriolis modulaire selon la revendication 10,
dans lequel le point de mesure de température (38) est structuré au moyen d'un traitement de surface par action d'un abrasif, en particulier du sable.

13. Débitmètre Coriolis modulaire selon la revendication 10,
dans lequel le point de mesure de la température (38) est formé par un film, en particulier avec des structures, appliqué sur le module de tube de mesure (4), en particulier sur le tube de mesure (3a, 3b).

14. Débitmètre Coriolis modulaire selon au moins l'une des revendications précédentes,
dans lequel le logement (11) est essentiellement fermé de manière étanche à la lumière lorsque le module de tube de mesure (4) est en place.

15. Débitmètre Coriolis modulaire selon au moins l'une des revendications précédentes,
dans lequel une distance *d_{Schutz}* entre la surface du tube de mesure (34) et le verre de protection (33) est inférieure à 5 et supérieure à 0,5 mm, en particulier inférieure à 3 et supérieure à 0,7 mm, et de préférence inférieure à 2 et supérieure à 1 mm.

16. Débitmètre Coriolis modulaire selon au moins l'une des revendications précédentes,
le module de tube de mesure (4) comportant un point de mesure de température (38) qui est conçu comme un composant (41) fixé au moins à un tube de mesure (3a, 3b), en particulier par complémentarité de forme et/ou par liaison de matière,
le capteur de température (12) étant orienté vers le point de mesure de température (38).

17. Débitmètre Coriolis modulaire selon la revendication 16,
le composant (41) correspondant au composant de capteur primaire (24) et/ou au composant d'excitation primaire (23).
